# EUROPEAN PATENT SPECIFICATION

(11) **EP 4 422 350 B1**
(45) Date of publication and mention of the grant of the patent: **29.10.2025**
(21) Application number: 22882612.9
(22) Date of filing: 28.09.2022
(51) Int. Cl.: H05B 6/64, H05B 6/68, F24C 7/02

(54) **CONTROL METHOD FOR A HEATING DEVICE AND A HEATING DEVICE**
STEUERUNGSVERFAHREN FÜR EIN HEIZGERÄT UND HEIZGERÄT
PROCÉDÉ DE COMMANDE POUR DISPOSITIF DE CHAUFFAGE ET DISPOSITIF DE CHAUFFAGE

(30) Priority: 18.10.2021 CN 202111211440
(43) Date of publication of application: 28.08.2024
(73) Proprietor: QINGDAO HAIER REFRIGERATOR CO., LTD., Qingdao, Shandong 266101 (CN); HAIER SMART HOME CO., LTD., Qingdao, Shandong 266101 (CN)
(72) Inventor: HAN, Zhiqiang, Qingdao, Shandong 266101 (CN); LI, Chunyang, Qingdao, Shandong 266101 (CN)
(74) Representative: Winter, Brandl - Partnerschaft mbB
(86) International application number: PCT/CN2022/122247
(87) International publication number: WO 2023/066001

(56) References cited:
- CN-A- 106 500 143
- CN-A- 111 669 859
- CN-A- 111 669 860
- CN-A- 112 996 161
- CN-U- 206 559 670
- US-A1- 2012 152 940
- US-A1- 2018 042 073
- US-A1- 2020 281 234
- US-B2- 10 648 728

## Description

### TECHNICAL FIELD

Present application relates to the field of food processing, and in particular to a control method for an electromagnetic wave heating device and a heating device.

### BACKGROUND

During the freezing process, the quality of food is preserved; however, frozen food needs to be thawed before processing or consumption. To facilitate thawing for users, electromagnetic wave heating devices are commonly used to thaw food.

Thawing food with electromagnetic wave heating devices not only offers rapid and efficient thawing but also minimizes the loss of nutritional components in food. Nonetheless, determining how to stop heating food at a state desired by users when the food is already at a higher temperature has been a technical problem that the skilled person in this field wants to solve. In the prior art, the rate of change of S11 is used to determine whether the thawing of the object to be processed is completed, however, due to the high heating efficiency of the electromagnetic wave, the temperature of food changes very rapidly, and slight changes in external factors (such as frequency) can cause rapid changes in S11, leading to a high error rate.

US 2020/281234 A1 and US 2012/152940 A1 disclose control methods according to the prior art comprising a matching step, a step of calculating a change amount and a heating termination step.

Reference to any prior art in the specification is not, and should not be take n as, an acknowledgment or any form of suggestion that this prior art forms part of the common general knowledge in Europe or any other jurisdiction or that this prior art c ould reasonably be expected to be understood and regarded as relevant by a person ski lled in the art.

### SUMMARY

A first aspect of the present application aims to provide a control method for an electromagnetic wave heating device, which utilize new heating termination conditions to determine whether heating is complete.

A further objective of the first aspect of the application is to shorten the frequency matching time and the calculation time for the change amount.

Another further objective of the first aspect of the application is to stop heating more precisely.

A second aspect of the present application aims to provide an electromagnetic wave heating device.

According to the first aspect of the present application, a control method for a heating device is provided, the heating device comprises a cylinder for placing an object to be processed, and an electromagnetic wave generating system for generating electromagnetic wave signals to heat the object to be processed, wherein the control method comprising:
frequency matching step: at each preset time interval, controlling the electromagnetic wave generating system to adjust the frequency of the generated electromagnetic wave signal within a preset selectable frequency range, and ensuring the electromagnetic wave generating system meets a preset matching condition;
step of calculating a change amount: recording the frequency of the electromagnetic wave signal that meets the preset matching condition each time ,and calculating the change amount in frequency of the electromagnetic wave signal that meets the preset matching condition from before the preset number of matches to the current match;
heating termination step: stopping the operation of the electromagnetic wave generating system when any one of preset termination conditions is met, wherein,
the preset termination conditions comprise the change amount being less than or equal to a preset change threshold.

Optionally, in the frequency matching step, the minimum value of the preset selectable frequency range to the frequency of the electromagnetic wave signal that met the preset matching condition in the previous instance is used as a selectable frequency range for the current frequency matching step; and
in the step of calculating a change amount, the difference between the frequency of the electromagnetic wave signal that meets the preset matching condition before the preset number of matches and the current match is calculated as the change amount.

Optionally, in the step of calculating a change amount, the difference between the frequency of every two adjacent electromagnetic wave signals that meet the preset matching condition is calculated, and all such differences are summed to obtain the change amount.

Optionally, in the first frequency matching step, the preset matching condition comprises the power of the reflected wave signal returned to the electromagnetic wave generating system being minimal.

Optionally, after the first frequency matching step is executed, it further comprises:
time determination step: determining a remaining heating time for the object to be processed based on the frequency of the electromagnetic wave signal that first meets the preset matching condition according to a preset comparison table, wherein, the comparison table records the relationship between frequency and the remaining heating time; and
the preset termination condition also comprises the heating time for the object to be processed being longer than or equal to the remaining heating time after the time determination step.

Optionally, when executing the frequency matching step for the first time and the preset number of matches closely following the first time, the preset matching condition comprises the power of the reflected wave signal returned to the electromagnetic wave generating system being minimal; and after executing the frequency matching step for the preset number of matches, the control method further comprises:
time determination step: determining a remaining heating time for the object to be processed based on a sum of the differences in frequency between every two adjacent electromagnetic wave signals that meet the preset matching condition within the first time and the preset number of matches closely following the first time according to a preset comparison table; wherein,
the comparison table records the relationship between the sum of the differences and the remaining heating time; and
the preset termination condition also comprises the heating time for the object to be processed being longer than or equal to the remaining heating time after the time determination step.

Optionally, after the time determination step, the preset matching condition comprises the ratio of the power of the reflected wave signal returned to the electromagnetic wave generating system and the power of the incident wave signal propagated by the electromagnetic wave generating system to the cylinder being greater than or equal to a preset ratio threshold;
When the condition of the preset matching condition being met occurs, the current frequency matching step is terminated.

Optionally, the preset number of matches is greater than or equal to 2.

Optionally, the preset time interval is 25s~40s.

According to the second aspect of the present application, a heating device is provided, the heating device comprises:
a cylinder for placing an object to be processed;
an electromagnetic wave generating system, configured to generate electromagnetic wave signals for heating the object to be processed; and
a controller, configured to execute any one of the control methods.

The inventors of this application have creatively recognized that the change amount in frequency that achieves matching within the same time is relatively small, only near the phase transition region of water has a significant decrease and being influenced by the degree of frequency matching. Using the change amount in frequency that meets the frequency matching condition as a condition for judging heating termination provides a particularly accurate determination of whether to stop heating. This enables the heating of food to stop at a state desired by the user, especially suitable for food defrosting, preventing the object to be processed from being overly defrosted. Typically, when defrosting is complete, the temperature is around -4 to -2°C, which can prevent the production of blood water when the object to be processed is meat, making it easier for users to cut.

Furthermore, the application, in the frequency matching step and the step of calculating a change amount, uses the minimum value of the preset selectable frequency range to the frequency of the electromagnetic wave signal that met the preset matching condition in the previous instance as a selectable frequency range for the current frequency matching step, and uses the difference between the frequency of the electromagnetic wave signal that meets the preset matching condition before the preset number of matches and the current match as the change amount. This approach allows for the rapid and accurate determination of the electromagnetic wave signal frequency that meets the preset matching condition, shortening the operating time of the frequency matching step and the step of calculating a change amount, thereby reducing the impact of the frequency matching process on the quality of the object to be processed and improving the timeliness of determining whether the heating termination conditions are met.

Furthermore, the application, based on using the change amount in frequency that meets the frequency matching condition as a criterion for terminating heating, also adds the remaining heating time determined by the frequency that first meets the preset matching condition, or the change amount in frequency over several times of meeting the preset matching condition, as a condition for judging the heating termination. This further enhances the accuracy of determining whether to stop heating, thereby ensuring the processed object's excellent quality upon heating completion and improving user experience.

Through the detailed description of specific embodiments of the application, combined with the drawings provided below, those skilled in the art will gain a clearer understanding of the aforementioned and other objectives, advantages, and features of the invention.

As used herein, except where the context clearly requires otherwise, the ter m "comprise" and variations of the term, such as "comprising", "comprises" and "com prised", are not intended to exclude further features, components, integers or steps.

### BRIEF DESCRIPTION OF THE DRAWINGS

The following descriptions of specific embodiments of the application refer to the accompanying drawings in an illustrative rather than restrictive manner. The same reference numbers in the drawings indicate identical or similar parts or components. Those skilled in the art should understand that these drawings are not necessarily drawn to scale. In the drawings:
FIG. 1 is a schematic structural diagram of a heating device according to an embodiment of the application;
FIG. 2 is a schematic structural diagram of the controller in the heating device shown in Figure 1;
FIG. 3 is a schematic flowchart of a control method for a heating device according to an embodiment of the application;
FIG. 4 is a schematic detailed flowchart of the control method for a heating device according to an embodiment of the application;
FIG. 5 is a schematic detailed flowchart of the control method for a heating device according to another embodiment of the application.

### DETAILED DESCRIPTION OF EMBODIMENTS

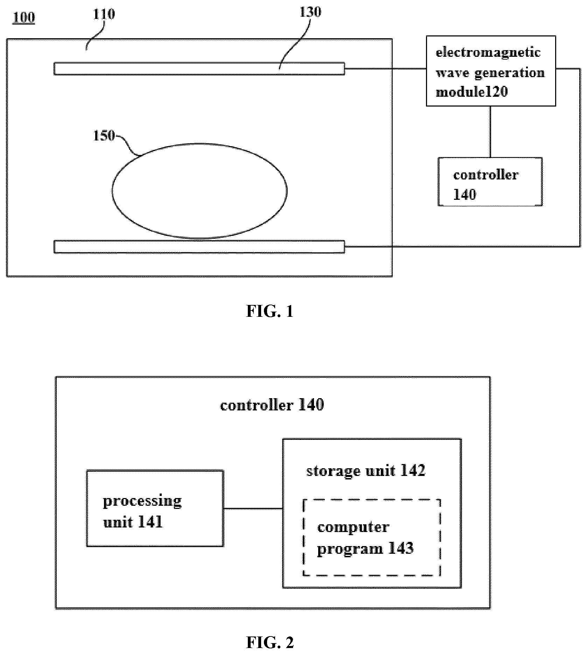

FIG. 1 is a schematic structural diagram of a heating device 100 according to an embodiment of the application. Referring to FIG. 1, the heating device 100 may comprise a cylinder 110, a door, an electromagnetic wave generation system, and a controller 140.

Specifically, the cylinder 110 can be used to contain the object to be processed 150. The door can be used to open and close the access port of the cylinder 110. Both the cylinder 110 and the door can have electromagnetic shielding features to reduce electromagnetic leakage.

The cylinder 110 can be made of metal and set to be grounded to further enhance the safety performance of the heating device 100.

The electromagnetic wave generation system may be at least partially disposed within the cylinder 110 or accessible to the cylinder 110, to emit electromagnetic waves into the cylinder 110 to heat the object to be processed 150.

The electromagnetic wave generation system may comprise an electromagnetic wave generation module 120, a radiation antenna 130 electrically connected to the electromagnetic wave generation module 120, and a power supply for powering the electromagnetic wave generation module 120.

The electromagnetic wave generation module 120 can be configured to generate electromagnetic wave signals. The radiation antenna 130 can be located within cylinder 110 to produce electromagnetic waves within cylinder 110, thereby heating the object to be processed 150 located inside the cylinder 110. Wherein, The electromagnetic wave generation module 120 may comprise a variable frequency source and a power amplifier.

FIG. 2 is a schematic structural diagram of the controller 140 in FIG. 1. Referring to FIG. 2, the controller 140 may comprise a processing unit 141 and a storage unit 142. The storage unit 142 stores a computer program 143, when the computer program 143 executed by the processing unit 141, is used to implement the control method of the embodiment of the application.

Specifically, the processing unit 141 can be configured to control the electromagnetic wave generation system at each preset time interval t to adjust the frequency of the generated electromagnetic wave signal within a preset selectable frequency range, ensuring the electromagnetic wave generation system meets a preset matching condition, recording the frequency of the electromagnetic wave signal that meets the preset matching condition each time, and calculating the change amount in frequency of the electromagnetic wave signal that meets the preset matching condition from before the preset number of matches to the current match. When the change amount is less than or equal to a preset change threshold S, the electromagnetic wave generation system is controlled to stop operating.

The heating device 100 of the application stops the operation of the electromagnetic wave generation system when the change amount in frequency that meets the frequency matching condition is less than or equal to the preset change threshold S, thus halting the heating of food at a state desired by the user, especially suitable for defrosting food. This prevents the object to be processed 150 from being overly defrosted, when defrosting is complete, the temperature is around -4 to -2°C, avoiding the production of blood water when the object to be processed 150 is meat, making it easier for users to cut.

In this application, the preset time interval t can be 25s to 40s, such as 25s, 30s, or 40s, to prevent misjudgment.

The selectable frequency range can be 400MHz to 500MHz, to ensure the uniform temperature of the object to be processed 150 and the efficiency of heating the object to be processed 150.

The preset number of matches can be greater than or equal to 2, such as 3, to prevent misjudgment. The preset number of matches can also be 1, meaning the change amount is the difference in frequency of the electromagnetic wave signal that meets the preset matching condition between two consecutive times.

During the frequency matching process, the power of the electromagnetic wave signal can be 5%~10% of the power during the normal heating process, to reduce the adverse effect on the object to be processed 150.

In some embodiments, the processing unit 141 can be configured to use the minimum value of the preset selectable frequency range to the frequency of the electromagnetic wave signal that met the preset matching condition in the previous instance as the selectable frequency range for the current frequency matching step, and calculate the difference between the frequency of the electromagnetic wave signal that meets the preset matching condition before the preset number of matches and the current match as the change amount. This allows for the rapid and accurate determination of the electromagnetic wave signal frequency that meets the preset matching condition, thereby reducing the impact of the frequency matching process on the quality of the object to be processed 150 and improving the timeliness of determining whether to stop heating.

In other embodiments, the processing unit 141 can be configured to first calculate the difference between the frequency of every two adjacent electromagnetic wave signals that meet the preset matching condition, and then sum all such differences to obtain the change amount, to enhance accuracy.

In some embodiments, at the first frequency matching, the matching condition can be: the power of the reflected wave signal returned to the electromagnetic wave generating system being minimal, to facilitate subsequent frequency matching and shorten the time for subsequent frequency matching.

The processing unit 141 can be configured to determine a remaining heating time T for the object to be processed 150 based on the frequency of the electromagnetic wave signal that first meets the preset matching condition according to a preset comparison table. When the continuation of the heating time for the object to be processed 150 is longer than or equal to the determined remaining heating time T, the electromagnetic wave generating system is controlled to stop operating, to further ensure the object to be processed 150 has excellent quality upon the completion of heating. The comparison table records the relationship between different frequencies and the remaining heating time T.

In other embodiments, when performing frequency matching for the first time and for a preset number of matches closely following the first time, the matching condition can be the same: the power of the reflected wave signal returned to the electromagnetic wave generating system being minimal.

The processing unit 141 can be configured to determine a remaining heating time T for the object to be processed 150 based on a sum of the differences in frequency between every two adjacent electromagnetic wave signals that meet the preset matching condition within the first time and the preset number of matches closely following the first time according to a preset comparison table. When the continuation of the heating time for the object to be processed 150 is longer than or equal to the determined remaining heating time T, the electromagnetic wave generating system is controlled to stop operating, to stop heating the object to be processed 150 more accurately and further ensure the object to be processed 150 has excellent quality upon heating completion. The comparison table records the relationship between the sum of the differences and the remaining heating time T.

In further embodiments, after determining the remaining heating time T, the matching condition can be: the ratio of the power of the reflected wave signal returned to the electromagnetic wave generating system and the power of the incident wave signal propagated by the electromagnetic wave generating system to the cylinder 110 is greater than or equal to a preset ratio threshold. The preset ratio threshold can be 70%~80%.

When the ratio of the power of the reflected wave signal and the power of the incident wave signal is greater than or equal to a preset ratio threshold, the current frequency matching step is terminated, to reduce the adverse impact on the object to be processed 150 and enhance heating efficiency.

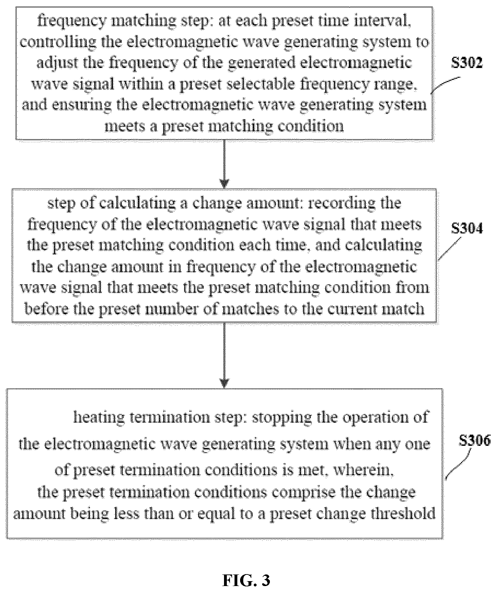

FIG. 3 is a schematic flowchart of a control method for a heating device 100 according to an embodiment of the application. Referring to FIG. 3, the control method for the heating device 100 executed by the controller 140 from any one of the embodiments of the application may include the following steps:

frequency matching step (S302): at each preset time interval t, controlling the electromagnetic wave generating system to adjust the frequency of the generated electromagnetic wave signal within a preset selectable frequency range, and ensuring the electromagnetic wave generating system meets a preset matching condition;
step of calculating a change amount (S304): recording the frequency of the electromagnetic wave signal that meets the preset matching condition each time, and calculating the change amount in frequency of the electromagnetic wave signal that meets the preset matching condition from before the preset number of matches to the current match;
heating termination step (S306): stopping the operation of the electromagnetic wave generating system when any of the preset termination conditions is met, where the preset termination conditions comprise the change amount being less than or equal to a preset change threshold S.

The control method of the application stops the operation of the electromagnetic wave generating system when the change amount in frequency that meets the frequency matching condition is less than or equal to the preset change threshold S, thus halting the heating of food at a state desired by the user, especially suitable for defrosting food. This prevents the object to be processed 150 from being overly defrosted, when defrosting is complete, the temperature is around -4 to -2°C, avoiding the production of blood water when the object to be processed 150 is meat, making it easier for users to cut.

In the frequency matching step (S302), the preset time interval t can be 25s to 40s, for example, 25s, 30s, or 40s, to prevent misjudgment. The selectable frequency range can be 400MHz to 500MHz, to ensure the uniformity of the temperature of the object to be processed 150 and the efficiency of heating the object to be processed 150.

In the step of calculating a change amount (S304), the preset number of matches can be greater than or equal to 2, such as 3, to prevent misjudgment. The preset number of matches can also be 1, meaning the change amount is the difference in frequency of the electromagnetic wave signal that meets the preset matching condition between two consecutive times.

During the frequency matching step (S302), the power of the electromagnetic wave signal can be 5%~10% of the power during other steps, to reduce the adverse effect on the object to be processed 150.

In some embodiments, during the frequency matching step (S302), the minimum value of the preset selectable frequency range to the frequency of the electromagnetic wave signal that met the preset matching condition in the previous instance is used as a selectable frequency range for the current frequency matching step, thereby determining a new selectable frequency range within the preset selectable frequency range, shortening the runtime of the frequency matching step (S302).

In the step of calculating a change amount (S304), calculating the difference between the frequency of the electromagnetic wave signal that meets the preset matching condition before the preset number of matches and the current match as the change amount, can shorten the time needed for calculating the change amount, enhancing the timeliness of ceasing heating the object to be processed 150.

In other embodiments, in the step of calculating a change amount (S304), the difference (absolute value) between the frequency of every two adjacent electromagnetic wave signals that meet the preset matching condition can be calculated first, and then all such differences are summed to obtain the change amount, to enhance accuracy.

In some embodiments, at the first execution of the frequency matching step (S302), the matching condition can be: the power of the reflected wave signal returned to the electromagnetic wave generation system being minimal, to facilitate subsequent frequency matching and shorten the time for subsequent frequency matching.

The control method of the application may also comprise a time determination step: determining a remaining heating time T for the object to be processed 150 based on the frequency of the electromagnetic wave signal that first meets the preset matching condition according to a preset comparison table. The comparison table records the relationship between different frequencies and the remaining heating time T.

The preset termination conditions may also comprise that continuation of the heating time for the object to be processed 150 to be longer than or equal to the determined remaining heating time T after the time determination step. That is, when the change amount in frequency that meets the frequency matching condition is less than or equal to the preset change threshold S, or continuation of the heating time for the object to be processed 150 to be longer than or equal to the determined remaining heating time T, the electromagnetic wave generating system is controlled to stop operating, to further ensure the object to be processed 150 has excellent quality upon completion of heating.

In other embodiments, when executing the frequency matching step (S302) for the first time and for a preset number of matches closely following the first time, the matching condition can be the same: the power of the reflected wave signal returned to the electromagnetic wave generating system being minimal.

The control method of the application may also comprise a time determination step: determining a remaining heating time T for the object to be processed 150 based on a sum of the differences (absolute value) in frequency between every two adjacent electromagnetic wave signals that meet the preset matching condition within the first time and the preset number of matches closely following the first time according to a preset comparison table. The comparison table records the relationship between the sum of the differences and the remaining heating time T.

The preset termination conditions may also comprise that continuation of the heating time for the object to be processed 150 after the time determination step to be longer than or equal to the determined remaining heating time T. That is, when the change amount in frequency that meets the frequency matching condition is less than or equal to the preset change threshold S, or continuation of the heating time for the object to be processed 150 to be longer than or equal to the determined remaining heating time T, the electromagnetic wave generating system is controlled to stop operating, to stop heating the object to be processed 150 more accurately and further ensure the object to be processed 150 has excellent quality upon heating completion.

In further embodiments, after the time determination step, the matching condition can be: the ratio of the power of the reflected wave signal returned to the electromagnetic wave generating system and the power of the incident wave signal propagated by the electromagnetic wave generating system to the cylinder being greater than or equal to a preset ratio threshold. The preset ratio threshold can be 70%~80%.

When the ratio of the power of the reflected wave signal and the power of the incident wave signal is greater than or equal to the preset ratio threshold, the current frequency matching process ends, to reduce the adverse impact on the object to be processed 150 and increase the heating efficiency.

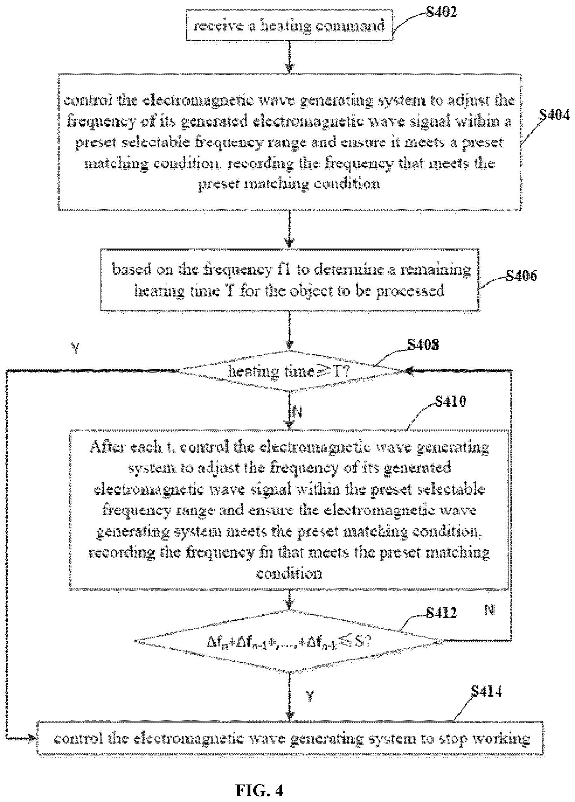

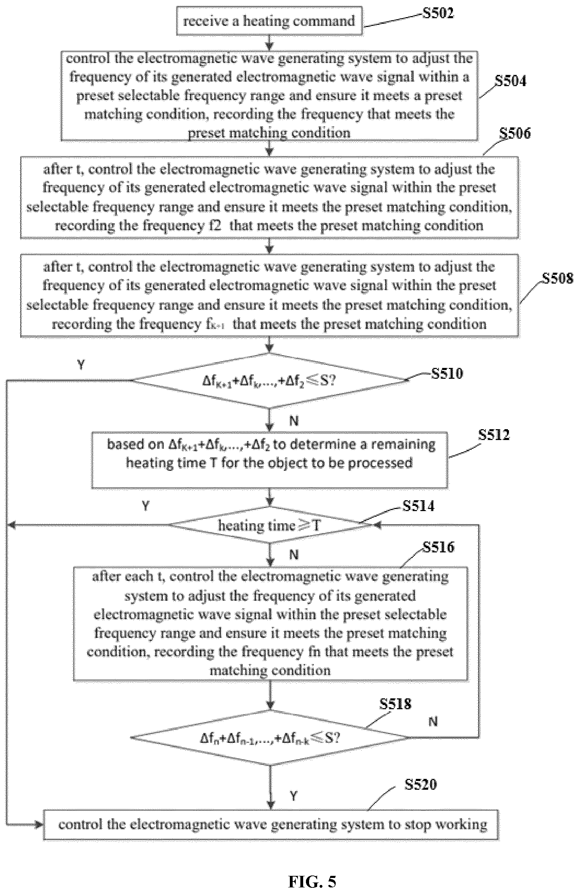

FIG. 4 is a schematic detailed flowchart of a control method for a heating device 100 according to an embodiment of the application (in Figures 4 and 5, "Y" indicates "Yes"; "N" indicates "No"). Referring to FIG. 4, the control method for the heating device 100 in one embodiment of the application may comprise the following detailed steps:
Step S402: receive a heating command.
Step S404: control the electromagnetic wave generating system to adjust the frequency of its generated electromagnetic wave signal within a preset selectable frequency range and ensure the electromagnetic wave generation system meets a preset matching condition, recording the frequency f1 of the electromagnetic wave signal that meets the preset matching condition.
Step S406: based on the frequency f1, according to a preset comparison table to determine a remaining heating time T for the object to be processed 150. The preset comparison table records the relationship between different frequencies and the remaining heating time T.
Step S408: determine if the continuation of the heating time for the object to be processed 150 after Step S406 is longer than or equal to the determined remaining heating time T. If yes, proceed to Step S414; if not, proceed to Step S410.
Step S410: After each preset time interval t, control the electromagnetic wave generating system to adjust the frequency of its generated electromagnetic wave signal within the preset selectable frequency range and ensure the electromagnetic wave generating system meets the preset matching condition, recording the frequency fn of the electromagnetic wave signal that meets the preset matching condition.
Step S412: determine if the sum of Δfₙ, Δfₙ₋₁, ..., and Δfₙ₋ₖ is less than or equal to the preset change threshold S. If yes, proceed to Step S414; if not, return to Step S408. Wherein, Δfₙ = fₙ₋₁ - fₙ; n represents the current frequency match; k is the preset number of matches.
Step S414: control the electromagnetic wave generating system to stop working.

FIG.5 is a schematic detailed flowchart of a control method for a heating device 100 according to another embodiment of the application. Referring to FIG. 5, the control method for the heating device 100 in another embodiment of the application may comprise the following detailed steps:
Step S502: receive a heating command.
Step S504: control the electromagnetic wave generating system to adjust the frequency of its generated electromagnetic wave signal within a preset selectable frequency range and ensure the electromagnetic wave generation system meets a preset matching condition, recording the frequency f1 of the electromagnetic wave signal that meets the preset matching condition.
Step S506: after preset time interval t, control the electromagnetic wave generating system to adjust the frequency of its generated electromagnetic wave signal within the preset selectable frequency range and ensure the electromagnetic wave generating system meets the preset matching condition, recording the frequency f2 of the electromagnetic wave signal that meets the preset matching condition.
Step S508: after each preset time interval t, control the electromagnetic wave generating system to adjust the frequency of its generated electromagnetic wave signal within the preset selectable frequency range and ensure the electromagnetic wave generation system meets the preset matching condition until the k+1th frequency match, recording the frequency fₖ₊₁ of the electromagnetic wave signal that meets the preset matching condition. Here, k is the preset number of matches.
Step S510: determine if the sum of Δfₖ₊₁, Δfₖ, ..., and Δf₂ is less than or equal to the preset change threshold S. If yes, proceed to Step S520; if not, proceed to Step S512. Here, Δfₖ₊₁ = fₖ - fₖ₊₁.
Step S512: based on the sum of Δfₖ₊₁, Δfₖ, ..., and Δf₂, according to a preset comparison table to determine the remaining heating time T for the object to be processed 150. Wherein, the preset comparison table records the relationship between different sum of differences and the remaining heating time T.
Step S514: determine if the continuation of the heating time for the object to be processed 150 after Step S512 is longer than or equal to the determined remaining heating time T. If yes, proceed to Step S520; if not, proceed to Step S516.
Step S516: after each preset time interval t, control the electromagnetic wave generating system to adjust the frequency of its generated electromagnetic wave signal within the preset selectable frequency range and ensure the electromagnetic wave generation system meets the preset matching condition, recording the frequency fn of the electromagnetic wave signal that meets the preset matching condition. Here, n represents the current frequency match.
Step S518:determine if the sum of Δfₙ, Δfₙ₋₁, ..., and Δfₙ₋ₖ is less than or equal to the preset change threshold S. If yes, proceed to Step S520; if not, return to Step S514. Here, Δfₙ = fₙ₋₁ - fₙ.
Step S520: control the electromagnetic wave generating system to stop working.

With this, those skilled in the art should recognize that, although this document has extensively shown and described multiple exemplary embodiments of the application many other variations or modifications that are in accordance with the principles of the application can be directly determined or derived without departing from the scope of the invention as defined in the appended claims. Therefore, the scope of the application should be understood and interpreted to cover all such other variations or modifications.

## Claims

1. A control method for a heating device(100), the heating device(100) comprises a cylinder(110) for placing an object to be processed(150), and an electromagnetic wave generating system for generating electromagnetic wave signals to heat the object to be processed, wherein the control method comprising:
frequency matching step: at each preset time interval, controlling the electromagnetic wave generating system to adjust the frequency of the generated electromagnetic wave signal within a preset selectable frequency range, and ensuring the electromagnetic wave generating system meets a preset matching condition;
step of calculating a change amount: recording the frequency of the electromagnetic wave signal that meets the preset matching condition each time ,and calculating the change amount in frequency of the electromagnetic wave signal that meets the preset matching condition from before the preset number of matches to the current match;
heating termination step: stopping the operation of the electromagnetic wave generating system when any one of preset termination conditions is met, wherein,
the preset termination conditions comprise the change amount being less than or equal to a preset change threshold.

2. The control method according to claim 1, wherein:
in the frequency matching step, the minimum value of the preset selectable frequency range to the frequency of the electromagnetic wave signal that met the preset matching condition in the previous instance is used as a selectable frequency range for the current frequency matching step; and
in the step of calculating a change amount, the difference between the frequency of the electromagnetic wave signal that meets the preset matching condition before the preset number of matches and the current match is calculated as the change amount.

3. The control method according to claim 1, wherein:
in the step of calculating a change amount, the difference between the frequency of every two adjacent electromagnetic wave signals that meet the preset matching condition is calculated, and all such differences are summed to obtain the change amount.

4. The control method according to any one of claims 1~3, wherein:
in the first frequency matching step, the preset matching condition comprises the power of the reflected wave signal returned to the electromagnetic wave generating system being minimal.

5. The control method according to claim 4, wherein, after the first frequency matching step is executed, it further comprises:
time determination step: determining a remaining heating time for the object to be processed based on the frequency of the electromagnetic wave signal that first meets the preset matching condition according to a preset comparison table, wherein, the comparison table records the relationship between frequency and the remaining heating time; and
the preset termination condition also comprises the heating time for the object to be processed being longer than or equal to the remaining heating time after the time determination step.

6. The control method according to any one of claims 1~3, wherein,
when executing the frequency matching step for the first time and the preset number of matches closely following the first time, the preset matching condition comprises the power of the reflected wave signal returned to the electromagnetic wave generating system being minimal; and after executing the frequency matching step for the preset number of matches, the control method further comprises:
time determination step: determining a remaining heating time for the object to be processed based on a sum of the differences in frequency between every two adjacent electromagnetic wave signals that meet the preset matching condition within the first time and the preset number of matches closely following the first time according to a preset comparison table; wherein,
the comparison table records the relationship between the sum of the differences and the remaining heating time; and
the preset termination condition also comprises the heating time for the object to be processed being longer than or equal to the remaining heating time after the time determination step.

7. The control method according to claims 5 or 6, wherein,
after the time determination step, the preset matching condition comprises the ratio of the power of the reflected wave signal returned to the electromagnetic wave generating system and the power of the incident wave signal propagated by the electromagnetic wave generating system to the cylinder being greater than or equal to a preset ratio threshold;
when the condition of the preset matching condition being met occurs, the current frequency matching step is terminated.

8. The control method according to any one of claims 1~3, wherein,
the preset number of matches is greater than or equal to 2.

9. The control method according to any one of claims 1~3, wherein,
the preset time interval is 25s~40s.

10. A heating device(100), **characterized in that**, it comprises:
a cylinder(110) for placing an object to be processed(150);
an electromagnetic wave generating system, configured to generate electromagnetic wave signals for heating the object to be processed(150); and
a controller(140), configured to execute the control method according to any one of claims 1~9.

## Patentansprüche

1. Steuerverfahren für eine Heizvorrichtung (100), wobei die Heizvorrichtung (100) einen Zylinder (110) zur Aufnahme eines Verarbeitungsgegenstands (150) und ein elektromagnetisches Wellenerzeugungssystem zur Erzeugung elektromagnetischer Wellensignale zum Erwärmen des Verarbeitungsgegenstands aufweist, wobei das Steuerverfahren folgende Schritte umfasst:
einen Frequenzanpassungsschritt: Ansteuern des elektromagnetischen Wellenerzeugungssystems in jedem voreingestellten Zeitintervall, um die Frequenz des erzeugten elektromagnetischen Wellensignals innerhalb eines voreingestellten wählbaren Frequenzbereichs einzustellen und zum Sicherstellen, dass das elektromagnetische Wellenerzeugungssystem eine voreingestellte Anpassungsbedingung erfüllt;
einen Schritt zum Berechnen eines Änderungsbetrags: Aufzeichnen der Frequenz des elektromagnetischen Wellensignals, das jedes Mal die voreingestellte Anpassungsbedingung erfüllt, und zum Berechnen des Änderungsbetrags der Frequenz des elektromagnetischen Wellensignals, das die voreingestellte Anpassungsbedingung erfüllt, von vor der voreingestellten Anzahl von Anpassungen bis zur aktuellen Anpassung; und
einen Heizungsbeendigungsschritt: Stoppen des Betriebs des elektromagnetischen Wellenerzeugungssystems, wenn irgendeine von voreingestellten Beendigungsbedingungen erfüllt ist, wobei die voreingestellten Beendigungsbedingungen umfassen, dass der Änderungsbetrag kleiner oder gleich einem voreingestellten Änderungsschwellenwert ist.

2. Steuerverfahren nach Anspruch 1, wobei
in dem Frequenzanpassungsschritt der Minimalwert des voreingestellten wählbaren Frequenzbereichs zu der Frequenz des elektromagnetischen Wellensignals, das die voreingestellte Anpassungsbedingung im vorherigen Fall erfüllte, als ein wählbarer Frequenzbereich für den aktuellen Frequenzanpassungsschritt verwendet wird; und
in dem Schritt zum Berechnen eines Änderungsbetrags die Differenz zwischen der Frequenz des elektromagnetischen Wellensignals, das die voreingestellte Anpassungsbedingung vor der voreingestellten Anzahl von Anpassungen erfüllt, und der Frequenz der aktuellen Anpassung als der Änderungsbetrag berechnet wird.

3. Steuerverfahren nach Anspruch 1, wobei
in dem Schritt zum Berechnen eines Änderungsbetrags die Differenz zwischen der Frequenz von jeweils zwei benachbarten elektromagnetischen Wellensignalen, welche die voreingestellte Anpassungsbedingung erfüllen, berechnet wird und alle diese Differenzen summiert werden, um den Änderungsbetrag zu erhalten.

4. Steuerverfahren nach einem der Ansprüche 1 bis 3, wobei
in dem ersten Frequenzanpassungsschritt die voreingestellte Anpassungsbedingung umfasst, dass die Leistung des reflektierten Wellensignals, das zu dem elektromagnetischen Wellenerzeugungssystem zurückkehrt, minimal ist.

5. Steuerverfahren nach Anspruch 4, wobei das Steuerverfahren nach der Ausführung des ersten Frequenzanpassungsschritts ferner den folgenden Schritt umfasst:
einen Zeiterfassungsschritt: Bestimmen einer verbleibenden Heizzeit für den Verarbeitungsgegenstand, basierend auf der Frequenz des elektromagnetischen Wellensignals, das zuerst die voreingestellte Anpassungsbedingung erfüllt, gemäß einer voreingestellten Vergleichstabelle, wobei die Vergleichstabelle die Beziehung zwischen Frequenz und der verbleibenden Heizzeit aufzeichnet; und wobei
die voreingestellte Beendigungsbedingung ferner umfasst, dass die Heizzeit für den Verarbeitungsgegenstand länger oder gleich der verbleibenden Heizzeit nach dem Zeiterfassungsschritt ist.

6. Steuerverfahren nach einem der Ansprüche 1 bis 3, wobei
wenn der Frequenzanpassungsschritt erstmalig ausgeführt wird und die voreingestellte Anzahl von Anpassungen der erstmaligen Ausführung unmittelbar folgen, die voreingestellte Anpassungsbedingung umfasst, dass die Leistung des reflektierten Wellensignals, das zu dem elektromagnetischen Wellenerzeugungssystem zurückkehrt, minimal ist; und wobei nach der Ausführung des Frequenzanpassungsschritts für die voreingestellte Anzahl von Anpassungen das Steuerverfahren ferner den folgenden Schritt umfasst:
einen Zeiterfassungsschritt: Bestimmen einer verbleibenden Heizzeit für den Verarbeitungsgegenstand, basierend auf einer Summe der Differenzen in der Frequenz zwischen jeweils zwei benachbarten elektromagnetischen Wellensignalen, welche die voreingestellte Anpassungsbedingung innerhalb der erstmaligen Ausführung und der voreingestellten Anzahl von Anpassungen, die der erstmaligen Ausführung unmittelbar folgen, erfüllen, gemäß einer voreingestellten Vergleichstabelle; wobei
die Vergleichstabelle die Beziehung zwischen der Summe der Differenzen und der verbleibenden Heizzeit aufzeichnet; und wobei
die voreingestellte Beendigungsbedingung auch umfasst, dass die Heizzeit für den Verarbeitungsgegenstand länger oder gleich der verbleibenden Heizzeit nach dem Zeiterfassungsschritt ist.

7. Steuerverfahren nach Anspruch 5 oder 6, wobei
nach dem Zeiterfassungsschritt die voreingestellte Anpassungsbedingung umfasst, dass das Verhältnis der Leistung des reflektierten Wellensignals, das zu dem elektromagnetischen Wellenerzeugungssystem zurückkehrt, und der Leistung des einfallenden Wellensignals, das von dem elektromagnetischen Wellenerzeugungssystem zu dem Zylinder abgestrahlt wird, größer oder gleich einem voreingestellten Verhältnisschwellenwert ist; wobei,
wenn die Bedingung eintritt, dass die voreingestellte Anpassungsbedingung erfüllt ist, der aktuelle Frequenzanpassungsschritt beendet wird.

8. Steuerverfahren nach einem der Ansprüche 1 bis 3, wobei:
die voreingestellte Anzahl von Anpassungen größer oder gleich 2 ist.

9. Steuerverfahren nach einem der Ansprüche 1 bis 3, wobei:
das voreingestellte Zeitintervall 25s bis 40s beträgt.

10. Heizvorrichtung (100), **dadurch gekennzeichnet, dass** Folgendes aufweist:
einen Zylinder (110) zur Aufnahme eines Verarbeitungsgegenstands (150);
ein elektromagnetisches Wellenerzeugungssystem, das konfiguriert ist, um elektromagnetische Wellensignale zum Erwärmen des Verarbeitungsgegenstands (150) zu erzeugen; und
eine Steuerung (140), die konfiguriert ist, um das Steuerverfahren nach einem der Ansprüche 1 bis 9 auszuführen.

## Revendications

1. Procédé de commande pour un dispositif de chauffage (100), le dispositif de chauffage (100) comprend un cylindre (110) pour placer un objet à traiter (150), et un système de génération d'ondes électromagnétiques pour générer des signaux d'onde électromagnétique pour chauffer l'objet à traiter, dans lequel le procédé de commande comprend :
une étape d'adaptation de fréquence : à chaque intervalle de temps prédéfini, la commande du système de génération d'ondes électromagnétiques pour ajuster la fréquence du signal d'onde électromagnétique généré dans une plage de fréquences sélectionnable prédéfinie, et le fait de garantir que le système de génération d'ondes électromagnétiques répond à une condition d'adaptation prédéfinie ;
une étape de calcul d'une quantité de changement : l'enregistrement, à chaque fois, de la fréquence du signal d'onde électromagnétique qui répond à la condition d'adaptation prédéfinie, et le calcul de la quantité de changement de fréquence du signal d'onde électromagnétique qui répond à la condition d'adaptation prédéfinie avant le nombre prédéfini d'adaptations jusqu'à l'adaptation actuelle ;
une étape de fin de chauffage : l'arrêt du fonctionnement du système de génération d'ondes électromagnétiques lorsque l'une quelconque de conditions de fin prédéfinies est remplie, dans lequel,
les conditions de fin prédéfinies comprennent la quantité de changement étant inférieure ou égale à un seuil de changement prédéfini.

2. Procédé de commande selon la revendication 1, dans lequel :
dans l'étape d'adaptation de fréquence, la valeur minimale de la plage de fréquences sélectionnable prédéfinie par rapport à la fréquence du signal d'onde électromagnétique qui a satisfait à la condition d'adaptation prédéfinie dans l'instance précédente est utilisée comme plage de fréquences sélectionnable pour l'étape d'adaptation de fréquence actuelle ; et
dans l'étape de calcul d'une quantité de changement, la différence entre la fréquence du signal d'onde électromagnétique qui satisfait à la condition d'adaptation prédéfinie avant le nombre prédéfini d'adaptations et l'adaptation actuelle est calculée comme quantité de changement.

3. Procédé de commande selon la revendication 1, dans lequel :
dans l'étape de calcul d'une quantité de changement, la différence entre la fréquence de chaque paire de signaux d'onde électromagnétique adjacents qui satisfont à la condition d'adaptation prédéfinie est calculée, et toutes ces différences sont additionnées pour obtenir la quantité de changement.

4. Procédé de commande selon l'une quelconque des revendications 1~3, dans lequel :
dans la première étape d'adaptation de fréquence, la condition d'adaptation prédéfinie comprend le fait que la puissance du signal d'onde réfléchie renvoyé au système de génération d'ondes électromagnétiques soit minimale.

5. Procédé de commande selon la revendication 4, dans lequel, après l'exécution de la première étape d'adaptation de fréquence, il comprend en outre :
une étape de détermination du temps : la détermination d'un temps de chauffage restant pour l'objet à traiter sur la base de la fréquence du signal d'onde électromagnétique qui satisfait en premier à la condition d'adaptation prédéfinie selon un tableau de comparaison prédéfini, dans lequel le tableau de comparaison enregistre la relation entre la fréquence et le temps de chauffage restant ; et
la condition de fin prédéfinie comprend également le fait que le temps de chauffage de l'objet à traiter soit supérieur ou égal au temps de chauffage restant après l'étape de détermination du temps.

6. Procédé de commande selon l'une quelconque des revendications 1~3, dans lequel
lors de l'exécution de l'étape d'adaptation de fréquence pour la première fois et du nombre prédéfini d'adaptations suivant de près la première fois, la condition d'adaptation prédéfinie comprend le fait que la puissance du signal d'onde réfléchie renvoyé au système de génération d'ondes électromagnétiques soit minimale ; et après l'exécution de l'étape d'adaptation de fréquence pour le nombre prédéfini d'adaptations, le procédé de commande comprend en outre :
une étape de détermination du temps : la détermination d'un temps de chauffage restant pour l'objet à traiter sur la base de la somme des différences de fréquence entre chaque paire de signaux d'onde électromagnétique adjacents qui satisfont à la condition d'adaptation prédéfinie au cours de la première fois et du nombre prédéfini d'adaptations suivant de près la première fois, selon un tableau de comparaison prédéfini ; dans lequel,
le tableau de comparaison enregistre la relation entre la somme des différences et le temps de chauffage restant ; et
la condition de fin prédéfinie comprend également le fait que le temps de chauffage de l'objet à traiter soit supérieur ou égal au temps de chauffage restant après l'étape de détermination du temps.

7. Procédé de commande selon les revendications 5 ou 6, dans lequel
après l'étape de détermination du temps, la condition d'adaptation prédéfinie comprend le fait que le rapport de la puissance du signal d'onde réfléchi renvoyé au système de génération d'ondes électromagnétiques et de la puissance du signal d'onde incident propagé par le système de génération d'ondes électromagnétiques au cylindre soit supérieur ou égal à un seuil de rapport prédéfini ;
lorsque la condition de la condition d'adaptation prédéfinie est remplie, l'étape d'adaptation de fréquence actuelle prend fin.

8. Procédé de commande selon l'une quelconque des revendications 1~3, dans lequel le nombre prédéfini d'adaptations est supérieur ou égal à 2.

9. Procédé de commande selon l'une quelconque des revendications 1~3, dans lequel l'intervalle de temps prédéfini est de 25 s~40 s.

10. Dispositif de chauffage (100), **caractérisé en ce qu'**il comprend :
un cylindre (110) pour placer un objet à traiter (150) ;
un système de génération d'ondes électromagnétiques, configuré pour générer des signaux d'onde électromagnétique pour chauffer l'objet à traiter (150) ; et
un dispositif de commande (140), configuré pour exécuter le procédé de commande selon l'une quelconque des revendications 1~9.
